# FASCICULE DE BREVET EUROPEEN

(11) **EP 3 650 322 B1**
(45) Date de publication et mention de la délivrance du brevet: **14.07.2021**
(21) Numéro de dépôt: 19206823.7
(22) Date de dépôt: 04.11.2019
(51) Int. Cl.: B62D 35/00

(54) **CARROSSERIE DE VÉHICULE ROUTIER DE TRANSPORT DE MARCHANDISES MUNIE DE DÉFLECTEURS ARRIÈRE**
KAROSSERIE EINES STRASSENFAHRZEUGS FÜR DEN WARENTRANSPORT, DIE RÜCKSPOILER UMFASST
BODY OF A ROAD VEHICLE FOR TRANSPORTING GOODS PROVIDED WITH REAR DEFLECTORS

(30) Priorité: 06.11.2018 FR 1860193
(43) Date de publication de la demande: 13.05.2020
(73) Titulaire: Jean Chereau SAS, 50220 Ducey (FR)
(72) Inventeur: LECUIR, Christophe, 50300 MARCEY LES GREVES (FR); RENOUF, Gildas, 50370 LE GRAND-CELLAND (FR)
(74) Mandataire: Casalonga

(56) Documents cités:
- WO-A2-2016/187301
- US-A1- 2011 095 566
- US-B2- 9 845 118

## Description

La présente invention concerne le domaine des carrosseries destinées à être montées par exemple sur les châssis de véhicules routiers de transport de marchandises tels que des camions, des semiremorques, des remorques ou des porteurs.

L'espace de chargement intérieur d'une carrosserie est délimité par deux flancs verticaux opposés, un plancher, un plafond ou pavillon et une face avant. L'espace de chargement intérieur présente un accès arrière situé à l'opposé de la face avant et la carrosserie est munie d'un dispositif de fermeture de cet accès arrière. Ce dispositif de fermeture peut par exemple comprendre deux portes arrière.

De sorte à réduire la trainée aérodynamique d'un véhicule routier de transport de marchandises et par conséquence sa consommation de carburant, il est connu d'équiper la carrosserie d'un ou de plusieurs déflecteurs aérodynamiques.

Une solution consiste par exemple à fixer sur le cadre arrière de la carrosserie deux déflecteurs latéraux qui prolongent chacun vers l'arrière un des flancs de la carrosserie.

Toutefois, selon la réglementation européenne actuellement en vigueur, ce type de déflecteurs aérodynamiques fixes, qui ne sont ni escamotables ni rabattables, ne doit pas dépasser la longueur maximale autorisée pour la carrosserie de plus de vingt centimètres. Dès lors, lors du roulage, l'efficacité de tels déflecteurs arrière reste faible.

Par ailleurs, il arrive fréquemment que ces déflecteurs montés de façon fixe à l'arrière des flancs de la carrosserie subissent des chocs lors des mises à quai du véhicule.

Dans la pratique, ces déflecteurs latéraux arrière sont endommagés très rapidement. Ceci engendre des frais de réparation ou de changement des déflecteurs, mais surtout l'immobilisation du véhicule qui représente un coût particulièrement important.

La présente invention vise à remédier à ces inconvénients.

Le document US 9 845 118 décrit une carrosserie de véhicule routier de transport de marchandises selon le préambule de la revendication 1.

L'invention a pour objet une carrosserie de véhicule routier de transport de marchandises comprenant deux flancs verticaux, un pavillon, et un plancher assemblés entre eux et délimitant en partie un espace de chargement intérieur, et un cadre arrière de renfort fixé au moins sur les flancs. Des montants verticaux dudit cadre arrière et lesdits flancs forment des parois latérales de la carrosserie.

La carrosserie comprend en outre deux portes arrière de fermeture d'un accès audit espace de chargement intérieur mobiles à rotation chacune sur le cadre arrière entre une position fermée et une position ouverte extrême dans laquelle elle s'étend vers l'avant en étant espacée transversalement d'un des flancs. La carrosserie comprend également deux déflecteurs montés chacun sur l'une des portes arrière.

Selon une caractéristique générale de la carrosserie, celle-ci comprend au moins un système d'accouplement de chaque déflecteur à la porte arrière associée pour le montage mobile dudit déflecteur entre une position rabattue contre ladite porte arrière et une position déployée pour prolonger vers l'arrière l'une des parois latérales de la carrosserie. Chaque système d'accouplement comprend au moins une première bielle articulée audit déflecteur et à ladite porte arrière, et une deuxième bielle articulée audit déflecteur et à ladite porte arrière. Alternativement, la deuxième bielle peut être articulée audit déflecteur et à ladite première bielle.

Selon une autre caractéristique générale, lesdites première et deuxième bielles de chaque système d'accouplement sont articulées pour obtenir, en position déployée du déflecteur associé et lors du mouvement d'ouverture de la porte arrière associée vers sa position ouverte extrême, un déplacement dudit déflecteur relativement à la porte arrière associée vers sa position rabattue sous l'effet du déplacement, vers l'avant le long d'une des parois latérales de la carrosserie, d'un contact entre ledit déflecteur et ladite paroi latérale.

Les sens « longitudinal » et « transversal » sont utilisés en considérant le sens de la longueur de la carrosserie.

Avec la carrosserie de l'invention, chaque déflecteur arrière peut être manipulé par l'opérateur pour passer de sa position rabattue de rangement à sa position déployée. On réduit ainsi le risque de détériorations par rapport aux déflecteurs arrière fixes de l'état de la technique antérieure. En outre, avec le montage mobile des déflecteurs, il est possible de prévoir pour ces déflecteurs des dimensions longitudinales de plus de vingt centimètres, et par exemple inférieure à cinquante centimètres, de sorte à accroitre leur efficacité aérodynamique.

De plus, la cinématique de déplacement de chaque déflecteur permet à l'opérateur, par exemple avant la mise à quai, d'ouvrir la porte arrière associée à ce déflecteur vers la position ouverte extrême sans avoir au préalable à le rabattre contre la porte arrière. La gestuelle d'ouverture des portes arrière reste ainsi inchangée par rapport à une carrosserie conventionnelle sans déflecteurs.

Selon une première conception, lesdites première et deuxième bielles de chaque système d'accouplement sont articulées pour obtenir, en position déployée du déflecteur associé et lors du mouvement d'ouverture de la porte arrière associée vers sa position ouverte extrême, un contact entre ledit déflecteur et ladite paroi latérale, et lors de la poursuite dudit mouvement d'ouverture après contact, le déplacement dudit contact vers l'avant le long de ladite paroi latérale.

Selon une deuxième conception, lesdites première et deuxième bielles de chaque système d'accouplement sont articulées pour obtenir, en position déployée du déflecteur associé, un contact entre ledit déflecteur et ladite paroi latérale, et lors du mouvement d'ouverture de la porte arrière associée vers sa position ouverte extrême le déplacement dudit contact vers l'avant le long de ladite paroi latérale.

Avantageusement, lesdites première et deuxième bielles de chaque système d'accouplement sont articulées pour ramener ledit déflecteur dans sa position rabattue lors de la poursuite dudit mouvement d'ouverture de la porte arrière associée jusqu'à ladite position ouverte extrême.

Ainsi, lorsque l'opérateur ramène par la suite la porte arrière dans sa position de fermeture, il n'est pas nécessaire d'exercer une action spécifique sur le déflecteur pour le ramener dans sa position rabattue.

Selon une conception préférentielle, ledit système d'accouplement comprend en outre un vérin d'actionnement articulé à ladite porte arrière et à l'une des première et deuxième bielles pour exercer, au cours du mouvement de déploiement dudit déflecteur, un effort de poussée tendant à déplacer ledit déflecteur vers la position déployée. La manipulation du déflecteur de la position rabattue vers la position déployée est ainsi facilitée.

Avantageusement, le vérin d'actionnement est articulé de sorte à exercer, dans la position rabattue dudit déflecteur, un effort de poussée tendant à plaquer ledit déflecteur contre la porte arrière associée. Lors du roulage avec le déflecteur en position rabattue, ceci favorise le maintien de cette position même sous l'effet des vibrations.

Dans ce but, il est aussi possible de prévoir qu'en position déployée dudit déflecteur, l'une des première et deuxième bielles dudit système d'accouplement est en appui contre une butée de la porte arrière associée, et le vérin d'actionnement exerce un effort de poussée tendant à maintenir ledit déflecteur dans ladite position déployée.

Chaque porte arrière peut être montée mobile à rotation sur un des montants verticaux du cadre arrière, et le déflecteur associé à ladite porte peut être décalé vers l'arrière par rapport audit montant vertical dans la position déployée dudit déflecteur.

Dans un mode de réalisation particulier, chaque déflecteur est équipé d'au moins une roulette pour ledit contact avec ladite paroi latérale. La ou les roulettes de chaque déflecteur permettent d'éviter un endommagement du déflecteur ou de ladite paroi latérale de la carrosserie.

Alternativement, il est possible de prévoir d'autres moyens pour limiter le frottement entre le déflecteur et ladite paroi latérale de la carrosserie. Il est par exemple possible de prévoir des patins ou bandes en caoutchouc fixés sur le bord avant du déflecteur et/ou sur le flanc de la carrosserie.

Par « bord avant du déflecteur », on entend le bord vertical du déflecteur qui est orienté vers l'avant de la carrosserie dans la position déployée dudit déflecteur.

Selon une conception particulière, chaque porte arrière comprend au moins un insert rapporté pour le montage mobile à rotation de ladite porte sur le cadre arrière, ledit système d'accouplement associé à ladite porte comprenant une platine de support fixée sur ledit insert et sur laquelle est articulée au moins ladite première bielle.

Cette disposition particulière est avantageuse dans la mesure où le montage du système d'accouplement ne nécessite pas de modification de la conception des portes arrière, et peut donc être monté sur une carrosserie en cours de fabrication mais aussi sur une carrosserie déjà assemblée.

En variante, il reste cependant possible de prévoir un montage de la platine de support du système d'accouplement sur la porte arrière dans une zone distincte de l'insert prévu pour le montage à rotation de la porte arrière.

Dans un mode de réalisation particulier, ledit système d'accouplement peut comprendre en outre un organe de verrouillage à actionnement manuel apte à coopérer avec l'une desdites première et deuxième bielles dans la position rabattue dudit déflecteur pour le verrouillage de ladite bielle. On s'assure ainsi du blocage en position rabattue du déflecteur, indépendamment de l'effort exercé par le vérin d'actionnement.

Selon une disposition particulière avantageuse, dans la position fermée des portes arrière et dans sa position rabattue, chaque déflecteur est en retrait vers l'avant par rapport à un bord d'extrémité arrière du cadre arrière ou affleure avec ledit bord d'extrémité arrière.

Par « bord d'extrémité arrière » du cadre arrière, on entend le bord du cadre arrière qui est situé le plus en arrière de la carrosserie. Ce bord d'extrémité arrière peut par exemple être le bord arrière d'une traverse supérieure ou inférieure du cadre arrière ou d'un des montants verticaux de ce cadre arrière, ou encore être le bord arrière d'un ou de butoirs amortisseurs fixés sur ce cadre arrière. De tels butoirs amortisseurs sont prévus pour venir en appui contre les quais de chargement lors de l'accostage du véhicule et peuvent par exemple être réalisés en caoutchouc. Ces butoirs amortisseurs peuvent par exemple être fixés sur la traverse supérieure du cadre arrière, et/ou sur la traverse inférieure et/ou sur les montants verticaux du cadre.

Ainsi, dans sa position rabattue, le déflecteur ne s'étend pas en saillie vers l'arrière par rapport au cadre arrière équipé ou non de butoirs amortisseurs. On limite donc le risque de détériorations du déflecteur dans sa position rabattue.

L'invention concerne encore un procédé de fonctionnement d'un déflecteur monté sur la porte arrière d'une carrosserie de véhicule routier de transport de marchandises comprenant deux flancs verticaux, un pavillon et un plancher assemblés entre eux et délimitant en partie un espace de chargement intérieur, et un cadre arrière de renfort fixé au moins sur les flancs, des montants verticaux dudit cadre arrière et lesdits flancs formant des parois latérales de la carrosserie, la porte arrière étant mobile à rotation entre une position fermée pour fermer au moins en partie l'espace de chargement intérieur et une position ouverte extrême dans laquelle elle s'étend vers l'avant en étant espacée transversalement d'un des flancs, dans lequel :
- le déflecteur est relié à la porte arrière par l'intermédiaire de bielles en étant mobile par rapport à ladite porte arrière selon une cinématique de déplacement entre une position rabattue contre la porte arrière et une position déployée pour prolonger vers l'arrière l'une des parois latérales de la carrosserie, et dans lequel
- en position déployée du déflecteur et lors du mouvement d'ouverture de la porte arrière vers sa position ouverte extrême, le déplacement d'un contact vers l'avant entre le déflecteur et ladite paroi latérale provoque le déplacement du déflecteur selon ladite cinématique de déplacement vers sa position rabattue.

Selon un premier mode de mise en œuvre, en position déployée du déflecteur et lors du mouvement d'ouverture de la porte arrière vers sa position ouverte extrême, un contact entre ledit déflecteur et ladite paroi latérale est obtenu, et la poursuite dudit mouvement d'ouverture après contact provoque le déplacement dudit contact vers l'avant et ledit déplacement du déflecteur selon ladite cinématique de déplacement vers sa position rabattue.

Selon un deuxième mode de mise en œuvre, en position déployée du déflecteur un contact entre ledit déflecteur et ladite paroi latérale est obtenu, et le mouvement d'ouverture de la porte arrière associée vers sa position ouverte extrême provoque le déplacement dudit contact vers l'avant le long de ladite paroi latérale et ledit déplacement du déflecteur selon ladite cinématique de déplacement vers sa position rabattue.

La présente invention sera mieux comprise à la lecture de la description détaillée d'un mode de réalisation pris à titre d'exemple nullement limitatif et illustré par les dessins annexés sur lesquels :
- la figure 1 est une vue en perspective d'une carrosserie montée sur un châssis de véhicule routier de transport de marchandises selon un exemple de réalisation et équipée de déflecteurs arrière dans une position rabattue,
- la figure 2 est une vue de détail de la figure 1,
- la figure 3 est une vue de détail de la carrosserie de la figure 1 dans une position déployée des déflecteurs arrière,
- la figure 4 est une vue de détail de la figure 3,
- les figures 5 à 7 sont des vues en coupe partielle de la carrosserie de la figure 1 illustrant le passage d'un des déflecteurs arrière de sa position rabattue à sa position déployée dans une position fermée de la porte arrière associée, et
- les figures 8 à 13 sont des vues en coupe partielle de la carrosserie de la figure 1 illustrant le mouvement d'ouverture de la porte arrière représentée en figures 5 à 7 équipée d'un des déflecteurs arrière et le déplacement du déflecteur arrière dans sa position rabattue provoqué par ce mouvement d'ouverture.

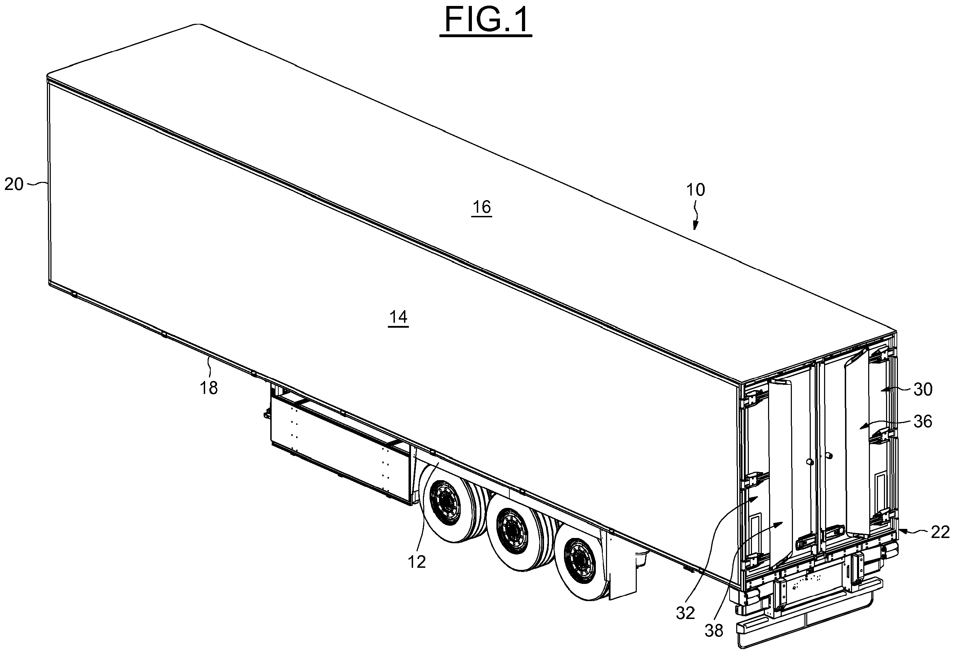

Sur la figure 1, on a représenté une carrosserie, référencée 10 dans son ensemble, montée sur un châssis 12 de véhicule de transport routier s'étendant longitudinalement et soutenu par des roues.

Comme illustré à la figure 1, la carrosserie 10 comprend deux flancs 14 verticaux opposés s'étendant longitudinalement (un seul étant visible sur la figure), un plafond ou pavillon 16, un plancher 18, et une face avant 20 qui sont assemblés entre eux pour délimiter un espace de chargement intérieur.

La carrosserie 10 comprend également un cadre arrière 22, nommé aussi custode, ayant une fonction de rigidification de la carrosserie. Le cadre arrière 22 rigide est fixé sur les extrémités arrière des flancs 14, du pavillon 16 et du plancher 18.

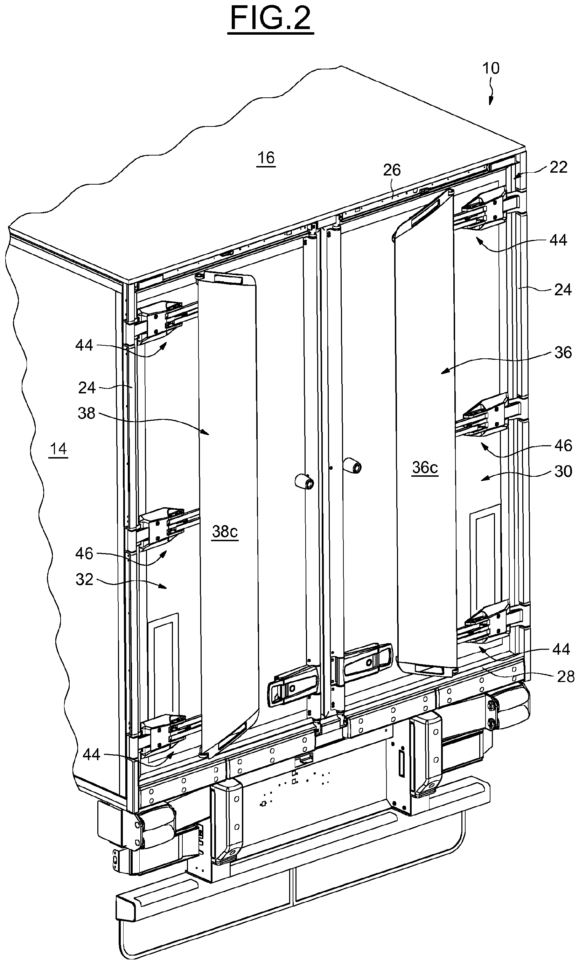

Comme illustré plus visiblement à la figure 2, le cadre arrière 22 comprend deux montants verticaux 24, une traverse supérieure 26 reliant les extrémités supérieures des montants verticaux 24, et une traverse inférieure 28 formant seuil reliant les extrémités inférieures des montants verticaux 24. Le cadre arrière 22 peut par exemple être réalisé en acier, notamment en acier inoxydable. Chaque montant vertical 24 du cadre arrière et le flanc 14 associé forment une paroi latérale de la carrosserie. La carrosserie comprend donc deux parois latérales opposées s'étendant longitudinalement.

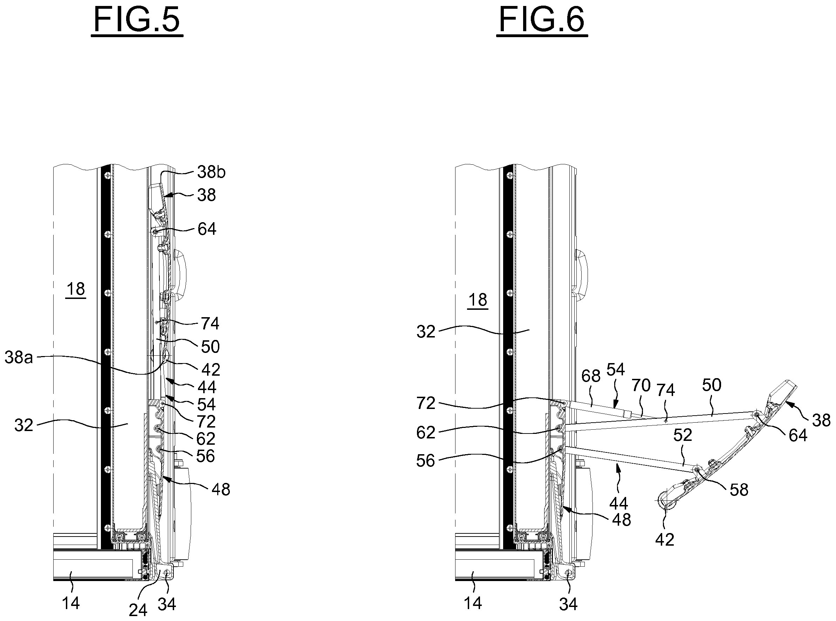

La carrosserie 10 comprend également deux portes arrière 30, 32 articulés chacune à rotation sur le cadre arrière 22. Les portes arrière 30, 32 forment respectivement des portes arrière droite et gauche. Chaque porte arrière 30, 32 est articulée sur un des montants verticaux 24 du cadre arrière autour d'axes d'articulation verticaux. Sur les figures, seul l'axe 34 d'articulation de la porte arrière 32 est visible (figures 5 à 13).

Chaque porte arrière 30, 32 est mobile entre une position de fermeture d'une ouverture ou accès arrière à l'espace de chargement intérieur illustrée à la figure 2, et une pluralité de positions d'ouverture. Chaque porte arrière 30, 32 est mobile jusqu'à une position ouverte extrême dans laquelle elle s'étend vers l'avant en étant espacée transversalement d'un des flancs 14. Dans cette position ouverte extrême, chaque porte arrière 30, 32 est généralement rabattue contre le flanc 14 associé. Dans l'exemple de réalisation illustré, dans sa position rabattue, chaque porte arrière 30, 32 vient en butée contre ledit flanc 14 associé par l'intermédiaire d'un bloc en caoutchouc (non référencé). Alternativement, il reste possible de prévoir d'autres moyens pour bloquer le pivotement de chaque porte arrière 30, 32 vers le flanc 14 associé dans sa position ouverte extrême.

La carrosserie 10 comprend également deux volets ou déflecteurs 36, 38 arrière aérodynamiques qui sont montés respectivement sur les portes arrière 30, 32. Les déflecteurs 36, 38 forment respectivement des déflecteurs arrière droite et gauche. Les déflecteurs 36, 38 sont identiques entre eux.

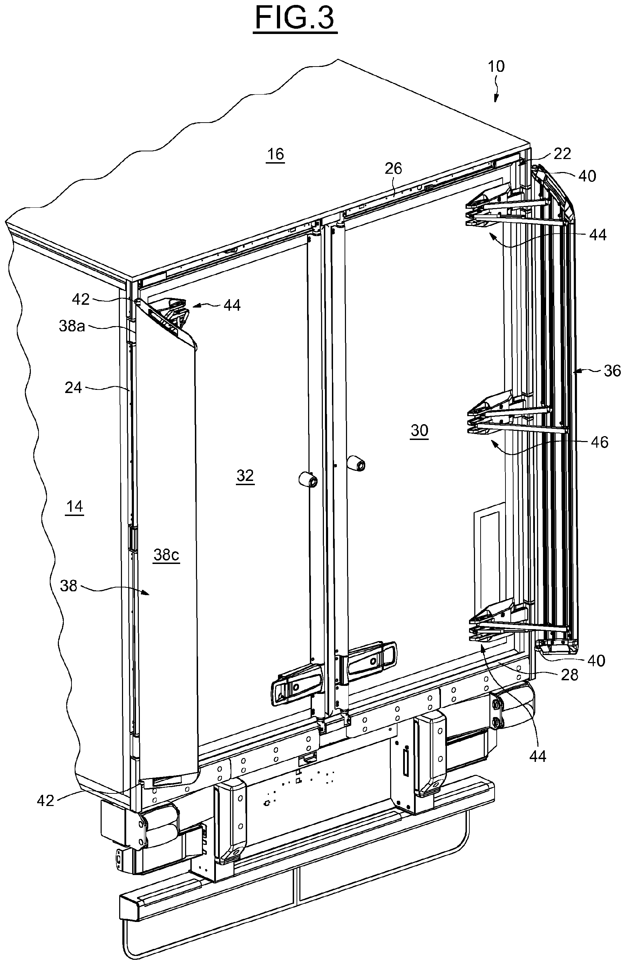

Chaque déflecteur 36, 38 est mobile relativement à la porte arrière 30, 32 associée entre une position rabattue contre cette porte (figure 2), et une position déployée pour prolonger vers l'arrière l'un des flancs 14 et le montant vertical 24 associé du cadre arrière (figure 3). Les positions rabattue et déployée de chaque déflecteur 36, 38 constituent les positions extrêmes de déplacement dudit déflecteur relativement à la porte arrière 30, 32 associée.

Comme cela sera décrit plus en détail par la suite, dans la position déployée de chaque déflecteur 36 et 38, le mouvement d'ouverture de la porte arrière 30, 32 correspondante provoque le déplacement du déflecteur jusque dans sa position rabattue.

Chaque déflecteur 36, 38 s'étend sur la majeure partie de la hauteur de la porte arrière 30, 32 associée. A titre indicatif, les déflecteurs 36, 38 peuvent présenter une hauteur comprise entre 200 cm et 300 cm, et de préférence entre 220 cm et 280 cm. Il est bien entendu possible de prévoir des déflecteurs de hauteur différente. A titre indicatif, les déflecteurs 36, 38 peuvent par exemple présenter une dimension longitudinale comprise entre 20 cm et 50 cm, notamment entre 35 cm et 50 cm, et de préférence égale à 40 cm. Il est là aussi possible de prévoir des déflecteurs avec des dimensions longitudinales différentes, par exemple selon les réglementations en vigueur.

Chaque déflecteur 36, 38 se présente sous la forme d'un panneau. Chaque déflecteur 36, 38 est réalisé ici par assemblage de plusieurs pièces. En variante, il est possible de prévoir des déflecteurs réalisés chacun en une seule pièce.

Les deux déflecteurs 36, 38 étant identiques, on décrira uniquement le déflecteur 36 en utilisant les référence "a", "b", "c" et "d", étant entendu que les éléments identiques du déflecteur 38 portent les mêmes références.

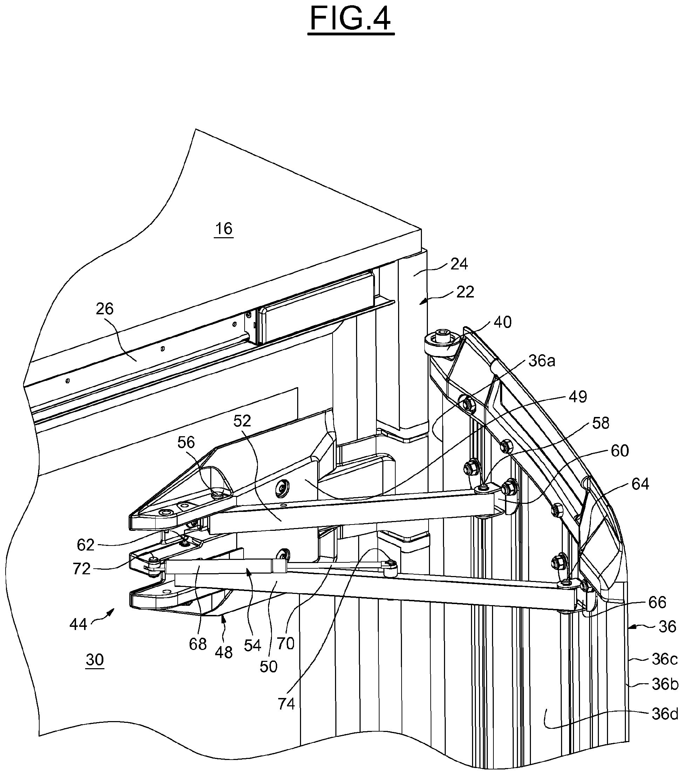

En se référant à la figure 4, le déflecteur 36 présente un bord avant 36a vertical et un bord arrière 36b vertical de fuite opposé dans le sens longitudinal. Les termes « avant » et « arrière » sont donnés en prenant en considération la position déployée du déflecteur. Le déflecteur 36 présente également une face extérieure 36c et une face intérieure 36d opposée. Les faces extérieure 36c et intérieure 36d relient les bords avant 36a et arrière 36b.

Dans l'exemple de réalisation illustré, chaque déflecteur 36, 38 comprend une paire de roulettes 40, 42 (figures 3 et 4) inférieure et supérieure disposées en saillie par rapport au bord avant 36a, 38a dudit déflecteur. Chaque roulette 40, 42 est montée libre à rotation autour d'un axe vertical (non référencé). Chaque roulette 40, 42 de la paire de roulettes est montée à une extrémité verticale du déflecteur associé.

Comme cela est notamment visible aux figures 2 et 3, la carrosserie 10 comprend encore une pluralité de systèmes d'accouplement 44, 46 associés à chaque déflecteur 36, 38 pour son montage mobile relativement à la porte arrière 30, 32 associée entre la position rabattue et la position déployée.

Dans l'exemple de réalisation illustré, à chaque déflecteur 36 et 38, il est associé deux systèmes d'accouplement 44 supérieur et inférieur et un système d'accouplement 46 intermédiaire disposé entre ces systèmes d'accouplement 44. Les systèmes d'accouplement 44 supérieur et inférieur sont identiques entre eux.

En se référant de nouveau à la figure 4, chacun des systèmes d'accouplement 44 du déflecteur 36 comprend une platine 48 de support fixée sur la face extérieure de la porte arrière 30, des première et deuxième bielles 50, 52 d'articulation, et un vérin d'actionnement 54 agissant sur la bielle 50.

Dans l'exemple de réalisation illustré, la platine 48 de support est fixée sur un des inserts 49 rapportés sur la face extérieure de la porte arrière 30 pour former une partie de la charnière assurant son articulation par rapport au montant vertical 24 du cadre arrière.

Une première extrémité de la bielle 52 est articulée sur la platine 48 autour d'un axe d'articulation 56 vertical. Une deuxième extrémité opposée de la bielle 52 est articulée sur le déflecteur 36 autour d'un axe d'articulation 58 vertical. La deuxième extrémité de la bielle 52 est articulée sur le déflecteur 36 par l'intermédiaire d'une platine 60 fixée sur la face intérieure 36d dudit déflecteur.

De façon analogue, une première extrémité de la bielle 50 est articulée sur la platine 48 autour d'un axe d'articulation 62 vertical. Une deuxième extrémité opposée de la bielle 50 est articulée sur le déflecteur 36 autour d'un axe d'articulation 64 vertical. La deuxième extrémité de la bielle 50 est articulée sur le déflecteur 36 par l'intermédiaire d'une platine 66. La platine 48 permet l'articulation des bielles 50, 52 relativement à la porte arrière 30 et les platines 60, 66 permettent l'articulation des bielles 52, 50 relativement au déflecteur 36.

La bielle 52 est articulée sur la face intérieure 36d du déflecteur 36 du côté du bord avant 36a et la bielle 50 est articulée sur cette face intérieure 36d du côté du bord arrière 36b. Les bielles 50, 52 sont disposés verticalement l'une en dessous de l'autre. La bielle 50 présente une longueur supérieure à celle de la bielle 52. Les axes d'articulation 56, 58 et 62, 64 des bielles sont distincts les uns des autres et s'étendent parallèlement entre eux.

Le vérin d'actionnement 54 comprend un corps 68 articulé à la porte arrière 30 par l'intermédiaire de la platine 48, et une tige 70 articulée à la bielle 50. Le vérin d'actionnement 54 est par exemple du type pneumatique, ou hydraulique ou encore mécanique comprenant un ressort à l'intérieur d'une cage. Le corps 68 et la tige 70 du vérin d'actionnement sont respectivement articulés à rotation autour d'axes d'articulation 72, 74 verticaux. Les axes d'articulation 72, 74 sont distincts des axes d'articulation 56, 58 et 62, 64 des bielles.

Dans l'exemple de réalisation illustré, le système d'accouplement 46 diffère du système d'accouplement 44 uniquement en ce qu'il ne comporte pas de vérin d'actionnement. Alternativement, il est possible de prévoir un système d'accouplement 46 équipé aussi d'un vérin.

En référence aux figures 5 à 7, on va maintenant décrire le déploiement du déflecteur 38 relativement à la porte arrière 32 dans la position fermée de ladite porte. Ce déploiement va être décrit en prenant en considération un seul des systèmes d'accouplement 44 étant entendu que le fonctionnement des autres systèmes d'accouplement est similaire.

Dans la position rabattue du déflecteur 38 qui est illustrée à la figure 5, celui-ci est plaqué contre la porte arrière 32, dans la zone du bord arrière 38b. Le bord avant 38a est décalé transversalement par rapport au montant vertical 24 du cadre arrière. Les bielles 50, 52 s'étendent transversalement le long de la porte arrière 32 et sont parallèles. Dans cette position rabattue, l'axe d'articulation 72 du vérin d'actionnement est décalé vers l'arrière de la carrosserie par rapport à l'axe d'allongement de la bielle 50 passant par les axes d'articulation 62, 64 de celle-ci. Ainsi, l'effort de poussée exercé par la tige du vérin d'actionnement 54 tend à maintenir plaqué le déflecteur 38 contre la porte arrière.

Lorsque l'opérateur souhaite faire passer le déflecteur 38 de sa position rabattue vers sa position déployée, il le fait pivoter dans le sens horaire en direction du flanc 14. Lors de ce mouvement de pivotement, les bielles 52, 50 pivotent autour de leurs axes d'articulation 56, 72 aussi dans le sens horaire en direction du flanc 14 comme cela illustré à la figure 6. Simultanément, il se produit également un pivotement angulaire des bielles 50, 52 relativement au déflecteur 38 autour des axes d'articulation 58, 64.

Lors de ce mouvement de rotation des bielles 50, 52 dans le sens horaire, l'effort de poussée exercé par la tige 70 du vérin d'actionnement tend à faciliter le déploiement du déflecteur 38 dès que la position neutre dudit vérin a été dépassée. Par « position neutre », on entend la position dans laquelle l'axe d'articulation 72 du vérin d'actionnement est aligné sur l'axe d'allongement de la bielle 50 qui passe par les axes d'articulation 62, 64.

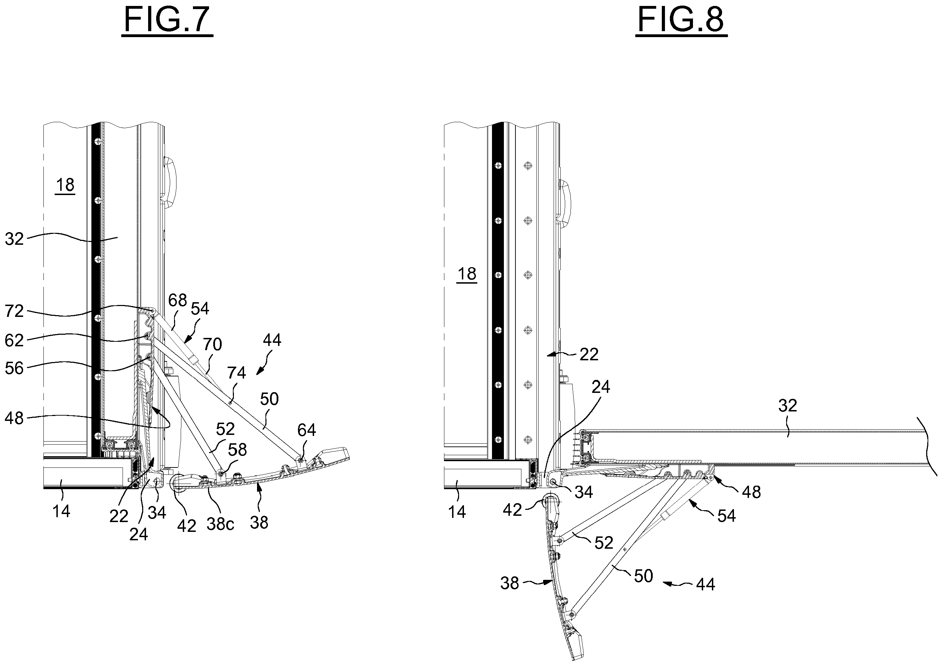

Le déploiement du déflecteur 38 est réalisé jusqu'à ce que la bielle 52 vienne en butée contre la platine 48 dans la position illustrée à la figure 7. Dans cet exemple de réalisation, la position déployée du déflecteur 38 est donc définie par le contact entre la platine 48 et la bielle 52 lors de la rotation de celle-ci. Le système d'accouplement 44 est configuré de sorte que dans la position déployée du déflecteur 38, le vérin d'actionnement 54 exerce toujours un effort de poussée sur la bielle 50. Autrement dit, dans cette position déployée du déflecteur, la tige 70 du vérin n'est pas en fin de course et exerce un effort de poussée tendant à maintenir le déflecteur 38 dans sa position déployée. Ainsi, on limite sur le déflecteur 38 les effets liés aux vibrations lors du roulage.

Comme indiqué précédemment, dans l'exemple de réalisation illustré, la position déployée du déflecteur 38 est définie par le contact entre la platine 48 et la bielle 52 lors de la rotation de celle-ci. Alternativement, le blocage du pivotement des bielles 50, 52 pourrait être obtenu par d'autres moyens. Par exemple, la position déployée du déflecteur 38 pourrait être définie par la fin de course du vérin d'actionnement 54. Cependant, cette solution est moins avantageuse dans la mesure où le déflecteur 38 serait plus sujet aux effets liés aux vibrations lors du roulage.

Dans la position déployée du déflecteur 38, sa face extérieure 38c est située dans le prolongement longitudinal de la face extérieure du flanc 14. La face extérieure 38c forme une face déflectrice du déflecteur qui, lors du roulage, prolonge le guidage du flux d'air s'écoulant le long du flanc 14 vers l'arrière. La face supérieure 38c du déflecteur est de forme convexe, i.e. arrondie vers l'extérieur, de sorte à guider le flux d'air vers l'intérieur.

Dans la position déployée du déflecteur 38, il n'existe aucun contact entre d'une part le déflecteur 38 et d'autre part le cadre arrière 22 ou encore le flanc 14 de la carrosserie. Le déflecteur 38 et ses roulettes 42 sont espacés et décalés vers l'arrière par rapport au cadre arrière 22 et au flanc 14.

En référence aux figures 7 à 13, on va maintenant décrire le mouvement d'ouverture de la porte arrière 32 dans la position déployée du déflecteur 38.

A partir de la position fermée de la porte arrière 32 illustrée à la figure 7, l'opérateur fait pivoter la porte autour de son axe 34 d'articulation dans le sens horaire. Dans l'exemple de réalisation illustré, lorsque la porte arrière 32 a pivoté de 90° dans le sens horaire et s'étend vers l'arrière comme cela est illustré à la figure 8, il n'existe toujours aucun contact du déflecteur 38 contre le cadre arrière 22 ou contre le flanc 14 de la carrosserie. Dans cette position, l'axe de chaque roulette 42 et l'axe 34 d'articulation sont ici situés dans un même plan transversal vertical.

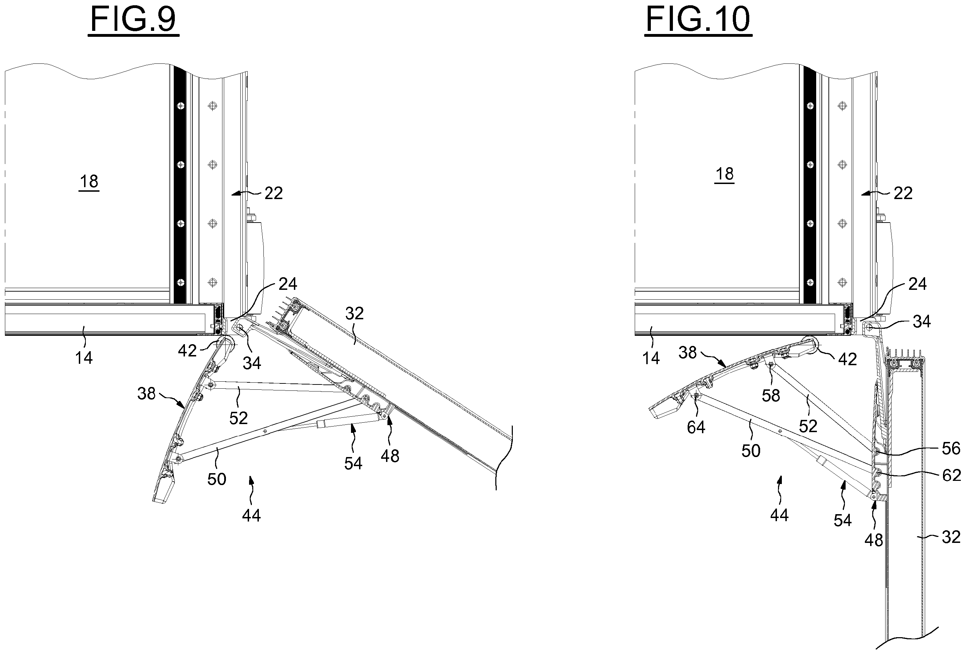

Lorsque l'opérateur continue de faire pivoter la porte arrière 32 dans le sens horaire, chaque roulette 42 du déflecteur vient en appui contre le montant vertical 24 du cadre arrière comme cela est illustré à la figure 9. Dans l'exemple de réalisation illustré, ce contact entre les roulettes 42 et le montant vertical 24 intervient pour un angle d'ouverture de la porte arrière 32 de l'ordre de 125°. En variante, il est possible de prévoir des valeurs d'angle d'ouverture différentes pour obtenir cette mise en contact. Par ailleurs, il est aussi possible d'avoir une mise en contact des roulettes 42 contre le flanc 14, et non contre le montant vertical 24 du cadre arrière.

Dans l'exemple de réalisation illustré, le contact qui intervient entre chaque roulette 42 et le montant vertical 24 est décalé vers l'avant dans le sens longitudinal par rapport à l'axe 34 d'articulation de la porte arrière 32. Lors du contact, le déflecteur 38 est aussi décalé vers l'avant par rapport à l'axe 34 d'articulation.

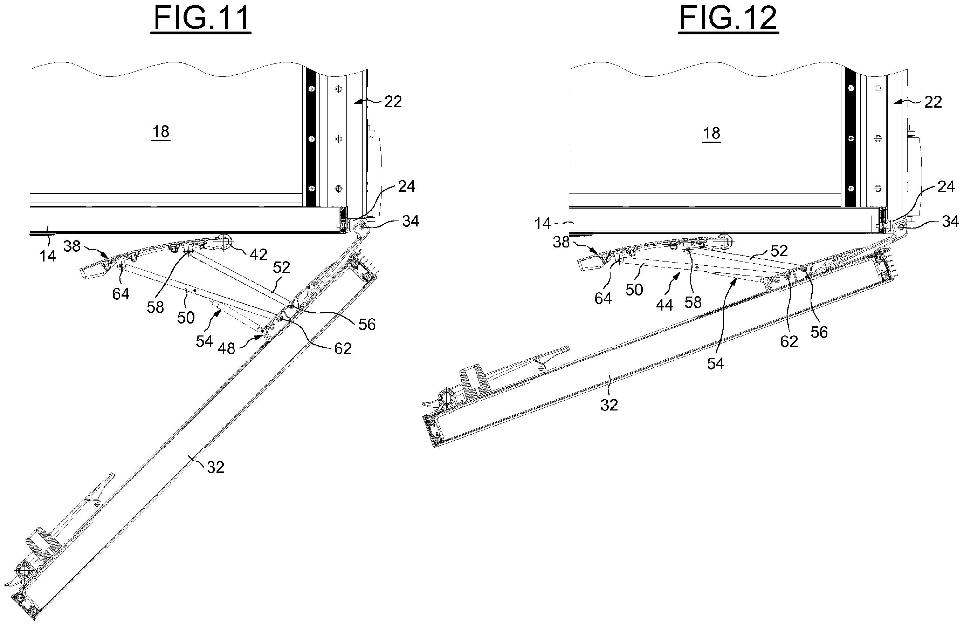

Lorsque l'opérateur poursuit le mouvement d'ouverture de la porte arrière 32 dans le sens horaire après contact de chaque roulette 42 contre le montant vertical 24 du cadre arrière, celle-ci roule vers l'avant le long du flanc 14 et les bielles 52, 50 pivotent autour de leur axes d'articulation 56, 72 dans le sens antihoraire comme cela est illustré aux figures 10 et 11. Il se produit également un pivotement angulaire des bielles 50, 52 relativement au déflecteur 38 autour des axes d'articulation 58, 64.

Lors de la poursuite du mouvement d'ouverture de la porte arrière 32 après que chaque roulette 42 soit venu en appui contre le montant vertical 24 du cadre arrière, ce contact se déplace donc vers l'avant le long du flanc 14 de la carrosserie.

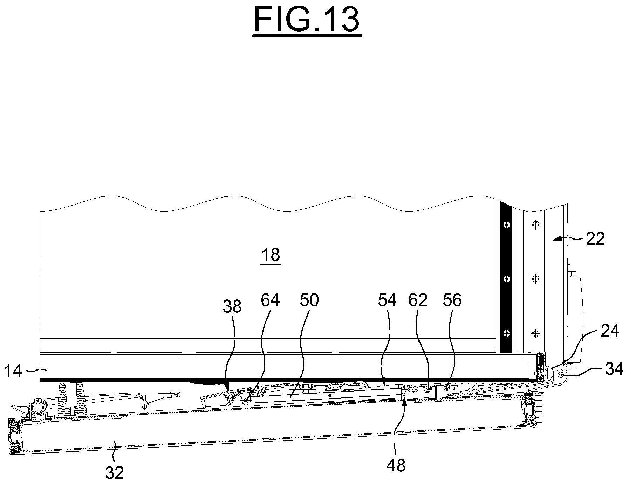

Comme illustré aux figures 12 et 13, lors de la poursuite du mouvement d'ouverture de la porte arrière 32 jusqu'à sa position ouverte extrême rabattue contre le flanc 14, chaque roulette 42 continue de rouler le long du flanc 14 et les bielles 50, 52 continuent de pivoter dans le sens antihoraire jusqu'à ce que le déflecteur 38 soit dans sa position rabattue contre la porte arrière. Le pivotement angulaire des bielles 50, 52 relativement au déflecteur 38 se poursuit également.

Lorsque les déflecteurs 36, 38 sont en position déployée et que l'opérateur souhaite ouvrir les portes arrière 30, 32 et les rabattre contre les flancs 14 par exemple avant la mise à quai, il n'est donc pas nécessaire pour l'opérateur de rabattre préalablement les déflecteurs 36, 38 contre les portes arrière. Lors de cette ouverture des portes arrière 30 et 32, le retour des déflecteurs 36, 38 de leur position déployée vers leur position rabattue s'effectue automatiquement, i.e. sans action spécifique de l'opérateur sur ces déflecteurs.

Lorsque l'opérateur referme ensuite les portes arrière 30 et 32, les déflecteurs 36, 38 sont maintenus dans leur position rabattue par l'effort exercé par chacun des vérins des systèmes d'accouplement 44, 46. De sorte à s'assurer du blocage en position rabattue de chacun des déflecteurs 36 et 38, il est possible d'équiper chaque système d'accouplement 44 inférieur d'un doigt de verrouillage (non représenté) monté coulissant verticalement à travers la platine 48 et prévu pour pénétrer à l'intérieur d'un évidement ménagé sur une des bielles, par exemple la bielle 52.

L'invention a été illustrée sur la base d'un agencement particulier des bielles 50, 52 des systèmes d'accouplement associés aux déflecteurs arrière. Dans l'exemple de réalisation illustré, chaque bielle 50, 52 est articulée à rotation sur le déflecteur et sur la porte arrière. En variante, selon un autre agencement, il est possible d'articuler la deuxième bielle 52 sur la première bielle 50 et sur le déflecteur associé. Avec un tel agencement, l'axe d'articulation de la bielle 52 sur la bielle 50 est monté avec possibilité de coulissement le long de la bielle 50, par exemple à l'intérieur d'une rainure oblongue de ladite bielle 50. Par ailleurs, dans l'exemple de réalisation illustré, le vérin d'actionnement 54 est articulé sur la bielle de plus grande longueur. Alternativement, le vérin d'actionnement pourrait être articulé sur l'autre bielle.

Comme indiqué précédemment, dans l'exemple de réalisation illustré, dans la position déployée du déflecteur 38, il n'existe aucun contact entre d'une part le déflecteur 38 et d'autre part la paroi latérale de la carrosserie formée par le cadre arrière 22 et le flanc 14 de la carrosserie.

Dans un mode de réalisation alternatif, il pourrait être possible de prévoir que, dans la position déployée du déflecteur 38, le déflecteur 38 vienne en appui contre la paroi latérale de la carrosserie, par exemple contre le montant vertical 24 du cadre arrière, et notamment par l'intermédiaire de ses roulettes 42. Dans un tel mode de réalisation, le contact entre le déflecteur 38 et la paroi latérale de la carrosserie intervient donc dès le passage en position déployée dudit déflecteur. Ensuite, lors du mouvement d'ouverture de la porte arrière, ce contact entre le déflecteur 38 et la paroi latérale de la carrosserie se déplace vers l'avant et provoque le passage du déflecteur dans sa position rabattue contre la porte arrière de manière analogue à l'exemple de réalisation illustré qui vient d'être décrit.

L'invention a été illustrée à titre d'exemple sur la base d'une carrosserie de véhicule routier de transport du type semi-remorque. L'invention est aussi applicable à une carrosserie de véhicule routier de transport du type porteur, camion, ou remorque.

## Revendications

1. Carrosserie de véhicule routier de transport de marchandises comprenant deux flancs (14) verticaux, un pavillon (16), et un plancher (18) assemblés entre eux et délimitant en partie un espace de chargement intérieur, et un cadre arrière (22) de renfort fixé au moins sur les flancs (14), des montants verticaux (24) dudit cadre arrière et lesdits flancs (14) formant des parois latérales de la carrosserie, ladite carrosserie comprenant en outre :
- deux portes arrière (30, 32) de fermeture d'un accès audit espace de chargement intérieur mobiles à rotation chacune sur le cadre arrière (22) entre une position fermée et une position ouverte extrême dans laquelle elle s'étend vers l'avant en étant espacée transversalement d'un des flancs (14),
- deux déflecteurs (36, 38) montés chacun sur l'une des portes arrière (30, 32), et
- au moins un système d'accouplement (44) de chaque déflecteur à la porte arrière associée pour le montage mobile dudit déflecteur entre une position rabattue contre ladite porte arrière et une position déployée pour prolonger vers l'arrière l'une des parois latérales de la carrosserie, chaque système d'accouplement comprenant au moins une première bielle (50) articulée audit déflecteur et à ladite porte arrière, et une deuxième bielle (52) articulée audit déflecteur et à ladite porte arrière ou à ladite première bielle,
- **caractérisée en ce que** lesdites première et deuxième bielles (50, 52) de chaque système d'accouplement sont articulées pour obtenir, en position déployée du déflecteur (36, 38) associé et lors du mouvement d'ouverture de la porte arrière associée vers sa position ouverte extrême, un déplacement dudit déflecteur relativement à la porte arrière associée vers sa position rabattue sous l'effet du déplacement, vers l'avant le long d'une des parois latérales de la carrosserie, d'un contact entre ledit déflecteur et ladite paroi latérale.

2. Carrosserie selon la revendication 1, dans laquelle lesdites première et deuxième bielles (50, 52) de chaque système d'accouplement sont articulées pour obtenir, en position déployée du déflecteur (36, 38) associé et lors du mouvement d'ouverture de la porte arrière associée vers sa position ouverte extrême, un contact entre ledit déflecteur et ladite paroi latérale, et lors de la poursuite dudit mouvement d'ouverture après contact, le déplacement dudit contact vers l'avant le long de ladite paroi latérale.

3. Carrosserie selon la revendication 1, dans laquelle lesdites première et deuxième bielles (50, 52) de chaque système d'accouplement sont articulées pour obtenir, en position déployée du déflecteur (36, 38) associé, un contact entre ledit déflecteur et ladite paroi latérale, et lors du mouvement d'ouverture de la porte arrière associée vers sa position ouverte extrême le déplacement dudit contact vers l'avant le long de ladite paroi latérale.

4. Carrosserie selon l'une quelconque des revendications précédentes, dans laquelle lesdites première et deuxième bielles (50, 52) de chaque système d'accouplement sont articulées pour ramener ledit déflecteur dans sa position rabattue lors de la poursuite dudit mouvement d'ouverture de la porte arrière associée jusqu'à ladite position ouverte extrême.

5. Carrosserie selon l'une quelconque des revendications précédentes, dans laquelle ledit système d'accouplement (44) comprend en outre un vérin d'actionnement (54) articulé à ladite porte arrière et à l'une des première et deuxième bielles (50, 52) pour exercer, au cours du mouvement de déploiement dudit déflecteur, un effort de poussée tendant à déplacer ledit déflecteur vers la position déployée.

6. Carrosserie selon la revendication 5, dans laquelle le vérin d'actionnement (54) est articulé de sorte à exercer, dans la position rabattue dudit déflecteur, un effort de poussée tendant à plaquer ledit déflecteur contre la porte arrière associée.

7. Carrosserie selon la revendication 5 ou 6, dans laquelle, en position déployée dudit déflecteur, l'une des première et deuxième bielles (50, 52) dudit système d'accouplement est en appui contre une butée de la porte arrière associée, et le vérin d'actionnement (54) exerce un effort de poussée tendant à maintenir ledit déflecteur dans ladite position déployée.

8. Carrosserie selon l'une quelconque des revendications précédentes, dans laquelle chaque porte arrière (30, 32) est montée mobile à rotation sur un des montants verticaux (24) du cadre arrière, le déflecteur (36, 38) associé à ladite porte étant décalé vers l'arrière par rapport audit montant vertical (24) dans la position déployée dudit déflecteur.

9. Carrosserie selon l'une quelconque des revendications précédentes, dans laquelle chaque déflecteur (36, 38) est équipé d'au moins une roulette (40, 42) pour ledit contact avec ladite paroi latérale.

10. Carrosserie selon l'une quelconque des revendications précédentes, dans laquelle chaque porte arrière (30, 32) comprend au moins un insert (49) rapporté pour le montage mobile à rotation de ladite porte sur le cadre arrière (22), ledit système d'accouplement (44) associé à ladite porte comprenant une platine de support (48) fixée sur ledit insert et sur laquelle est articulée au moins ladite première bielle (50).

11. Carrosserie selon l'une quelconque des revendications précédentes, dans laquelle ledit système d'accouplement (44) comprend en outre un organe de verrouillage à actionnement manuel apte à coopérer avec l'une desdites première et deuxième bielles (50, 52) dans la position rabattue dudit déflecteur pour le verrouillage de ladite bielle.

12. Carrosserie selon l'une quelconque des revendications précédentes, dans laquelle, dans la position fermée des portes arrière (30, 32) et dans sa position rabattue, chaque déflecteur (36, 38) est en retrait vers l'avant par rapport à un bord d'extrémité arrière du cadre arrière (22) ou affleure avec ledit bord d'extrémité arrière.

13. Procédé de fonctionnement d'un déflecteur (36) monté sur la porte arrière (30) d'une carrosserie de véhicule routier de transport de marchandises comprenant deux flancs (14) verticaux, un pavillon (16) et un plancher (18) assemblés entre eux et délimitant en partie un espace de chargement intérieur, et un cadre arrière (22) de renfort fixé au moins sur les flancs (14), des montants verticaux (24) dudit cadre arrière et lesdits flancs (14) formant des parois latérales de la carrosserie, la porte arrière (30) étant mobile à rotation entre une position fermée pour fermer au moins en partie l'espace de chargement intérieur et une position ouverte extrême dans laquelle elle s'étend vers l'avant en étant espacée transversalement d'un des flancs, dans lequel :
- le déflecteur (36) est relié à la porte arrière par l'intermédiaire de bielles en étant mobile par rapport à ladite porte arrière (30) selon une cinématique de déplacement entre une position rabattue contre la porte arrière et une position déployée pour prolonger vers l'arrière l'une des parois latérales de la carrosserie, et dans lequel
- en position déployée du déflecteur (36) et lors du mouvement d'ouverture de la porte arrière (30) vers sa position ouverte extrême, le déplacement d'un contact vers l'avant entre le déflecteur et ladite paroi latérale provoque le déplacement du déflecteur selon ladite cinématique de déplacement vers sa position rabattue.

## Patentansprüche

1. Karosserie eines Straßenfahrzeugs für den Warentransport, umfassend zwei vertikale Flanken (14), ein Dach (16) und einen Boden (18), die miteinander verbunden sind und einen inneren Laderaum teilweise begrenzen, und einen hinteren Verstärkungsrahmen (22), der mindestens an den Flanken (14), wobei vertikale Pfosten (24) des hinteren Rahmens und die Flanken (14) Seitenwände der Karosserie bilden, wobei die Karosserie ferner umfasst:
- zwei hintere Türen (30, 32) zum Verschließen eines Zugangs zu dem inneren Laderaum, die jeweils auf dem hinteren Rahmen (22) zwischen einer geschlossenen Position und einer extremen geöffneten Position, in der sie sich nach vorn erstreckt und dabei transversal von einer der Flanken (14) beabstandet ist, rotationsbeweglich ist,
- zwei Spoiler (36, 38), die jeweils auf einer der hinteren Türen (30, 32) angebracht sind, und
- mindestens ein Kopplungssystem (44) jedes Spoilers an der zugeordneten hinteren Tür für die bewegliche Anbringung des Spoilers zwischen einer an die hintere Tür angeklappten Position und einer ausgebreiteten Position, um eine der Seitenwände der Karosserie nach hinten zu verlängern, wobei jedes Kopplungssystem mindestens eine erste Pleuelstange (50) umfasst, die am Spoiler und an der hinteren Tür angelenkt ist, und eine zweite Pleuelstange (52), die am Spoiler und an der hinteren Tür oder an der ersten Pleuelstange angelenkt ist,
- **dadurch gekennzeichnet, dass** die erste und zweite Pleuelstange (50, 52) jedes Kopplungssystems angelenkt sind, um in ausgebreiteter Position des zugeordneten Spoilers (36, 38) und bei der Öffnungsbewegung der zugeordneten hinteren Tür in ihre extreme geöffnete Position eine Verlagerung des Spoilers relativ zu der zugeordneten hinteren Tür in dessen angeklappte Position unter der Wirkung der Verlagerung nach vorn entlang einer der Seitenwände der Karosserie eines Kontakts zwischen dem Spoiler und der Seitenwand zu erhalten.

2. Karosserie nach Anspruch 1, wobei die erste und zweite Pleuelstange (50, 52) jedes Kopplungssystems angelenkt sind, um in ausgebreiteter Position des zugeordneten Spoilers (36, 38) und bei der Öffnungsbewegung der zugeordneten hinteren Tür in deren extreme geöffnete Position einen Kontakt zwischen dem Spoiler und der Seitenwand und bei der Fortsetzung der Öffnungsbewegung nach Kontakt die Verlagerung des Kontakts nach vor entlang der Seitenwand zu erhalten.

3. Karosserie nach Anspruch 1, wobei die erste und zweite Pleuelstange (50, 52) jedes Kopplungssystems angelenkt sind, um in ausgebreiteter Position des zugeordneten Spoilers (36, 38) einen Kontakt zwischen dem Spoiler und der Seitenwand und bei der Öffnungsbewegung der zugeordneten hinteren Tür in deren extreme geöffnete Position die Verlagerung des Kontakts nach vorn entlang der Seitenwand zu erhalten.

4. Karosserie nach einem der vorangehenden Ansprüche, wobei die erste und zweite Pleuelstange (50, 52) jedes Kopplungssystems angelenkt sind, um den Spoiler bei der Fortsetzung der Öffnungsbewegung der zugeordneten hinteren Tür bis zu der extremen geöffneten Position in dessen angeklappte Position zurückzuführen.

5. Karosserie nach einem der vorangehenden Ansprüche, wobei das Kopplungssystem (44) ferner einen Betätigungszylinder (54) umfasst, der an der hinteren Tür und an einer von der ersten und zweiten Pleuelstange (50, 52) angelenkt ist, um bei der Ausbreitungsbewegung des Spoilers eine Schubkraft auszuüben, die bewirkt, dass der Spoiler in die ausgebreitete Position verlagert wird.

6. Karosserie nach Anspruch 5, wobei der Betätigungszylinder (54) derart angelenkt ist, dass er in der angeklappten Position des Spoilers eine Schubkraft ausübt, die bewirkt, dass der Spoiler an die zugeordnete hintere Tür angelegt wird.

7. Karosserie nach Anspruch 5 oder 6, wobei sich in ausgebreiteter Position des Spoilers eine von der ersten und zweiten Pleuelstange (50, 52) des Kopplungssystems auf einem Anschlag der zugeordneten hinteren Tür abstützt und der Betätigungszylinder (54) eine Schubkraft ausübt, die bewirkt, dass der Spoiler in der ausgebreiteten Position gehalten wird.

8. Karosserie nach einem der vorangehenden Ansprüche, wobei jede hintere Tür (30, 32) auf einem der vertikalen Pfosten (24) des hinteren Rahmens rotationsbeweglich angebracht ist, wobei der der Tür zugeordnete Spoiler (36, 38) in der ausgebreiteten Position des Spoilers im Verhältnis zu dem vertikalen Pfosten (24) nach hinten versetzt ist.

9. Karosserie nach einem der vorangehenden Ansprüche, wobei jeder Spoiler (36, 38) mit mindestens einer Rolle (40, 42) für den Kontakt mit der Seitenwand ausgestattet ist.

10. Karosserie nach einem der vorangehenden Ansprüche, wobei jede hintere Tür (30, 32) mindestens einen angebauten Einsatz (49) für die rotationsbewegliche Montage der Tür am hinteren Rahmen (22) umfasst, wobei das der Tür zugeordnete Kopplungssystem (44) eine Trägerplatte (48) umfasst, die auf dem Einsatz befestigt ist und auf der mindestens die erste Pleuelstange (50) angelenkt ist.

11. Karosserie nach einem der vorangehenden Ansprüche, wobei das Kopplungssystem (44) ferner ein manuell zu betätigendes Verriegelungsorgan umfasst, das imstande ist, in der angeklappten Position des Spoilers für die Verriegelung der Pleuelstange mit einer von der ersten und zweiten Pleuelstange (50, 52) zusammenzuwirken.

12. Karosserie nach einem der vorangehenden Ansprüche, wobei jeder Spoiler (36, 38) in der geschlossenen Position der hinteren Türen (30, 32) und in seiner angeklappten Position im Verhältnis zu einem hinteren Endrand des hinteren Rahmens (22) nach vorn zurückgezogen ist oder mit dem hinteren Endrand bündig ist.

13. Funktionsverfahren eines Spoilers (36), der auf der hinteren Tür (30) einer Karosserie eines Straßenfahrzeugs für den Warentransport angebracht ist, umfassend zwei vertikale Flanken (14), ein Dach (16) und einen Boden (18), die miteinander verbunden sind und einen inneren Laderaum teilweise begrenzen, und einen hinteren Verstärkungsrahmen (22), der mindestens an den Flanken (14) befestigt ist, wobei vertikale Pfosten (24) des hinteren Rahmens und die Flanken (14) Seitenwände der Karosserie bilden, wobei die hintere Tür (30) zwischen einer geschlossenen Position, um den inneren Laderaum mindestens teilweise zu schließen, und einer extremen geöffneten Position, in welcher sie sich nach vorn erstreckt und transversal von einer der Flanken beabstandet ist, rotationsbeweglich ist, wobei:
- der Spoiler (36) mit der hinteren Tür über Pleuelstangen verbunden ist, indem er im Verhältnis zu der hinteren Tür (30) gemäß einer Verlagerungskinematik zwischen einer angeklappten Position an die hintere Tür und einer ausgebreiteten Position, um eine der Seitenwände der Karosserie nach hinten zu verlängern, beweglich ist, und wobei
- in ausgebreiteter Position des Spoilers (36) und bei der Öffnungsbewegung der hinteren Tür (30) in ihre extreme geöffnete Position die Verlagerung eines Kontakts zwischen dem Spoiler und der Seitenwand nach vorn die Verlagerung des Spoilers gemäß der Verlagerungskinematik in dessen angeklappte Position bewirkt.

## Claims

1. A body of a road vehicle for transporting goods comprising two vertical sides (14), a roof (16), and a floor (18) assembled together and partially delimiting an interior cargo space, and a reinforcing rear frame (22) fastened at least on the sides (14), vertical uprights (24) of said rear frame and said sides (14) forming sidewalls of the body, said body further comprising:
- two rear doors (30, 32) for closing an access to said interior cargo space each movable in rotation on the rear frame (22) between a closed position and an extreme open position in which it extends forwards while being transversely spaced apart from one of the sides (14),
- two deflectors (36, 38) each mounted on one of the rear doors (30, 32), and
- at least one system for coupling (44) each deflector to the associated rear door for movably mounting said deflector between a folded position against said rear door and a deployed position to extend one of the sidewalls of the body rearwards, each coupling system comprising at least one first connecting rod (50) hinged to said deflector and to said rear door, and one second connecting rod (52) hinged to said deflector and to said rear door or to said first connecting rod,
- **characterised in that** said first and second connecting rods (50, 52) of each coupling system are hinged so as to obtain, in the deployed position of the associated deflector (36, 38) and during the movement of opening the associated rear door towards its extreme open position, a displacement of said deflector relative to the associated rear door towards its folded position by the effect of the displacement, forwards along one of the sidewalls of the body, of a contact between said deflector and said sidewall.

2. The body according to claim 1, wherein said first and second connecting rods (50, 52) of each coupling system are hinged so as to obtain, in the deployed position of the associated deflector (36, 38) and during the movement of opening the associated rear door towards its extreme open position, a contact between said deflector and said sidewall, and when said opening movement is carried on after contact, the displacement of said contact forwards along said sidewall.

3. The body according to claim 1, wherein said first and second connecting rods (50, 52) of each coupling system are hinged so as to obtain, in the deployed position of the associated deflector (36, 38), a contact between said deflector and said sidewall, and during the movement of opening the associated rear door towards its extreme open position the displacement of said contact forwards along said sidewall.

4. The body according to any one of the preceding claims, wherein said first and second connecting rods (50, 52) of each coupling system are hinged so as to bring said deflector back into its folded position when said movement of opening the associated rear door up to said extreme open position is carried on.

5. The body according to any one of the preceding claims, wherein said coupling system (44) further comprises an actuating cylinder (54) hinged to said rear door and to one of the first and second connecting rods (50, 52) so as to exert, during the movement of deploying said deflector, a pushing force tending to displace said deflector towards the deployed position.

6. The body according to claim 5, wherein the actuating cylinder (54) is hinged so as to exert, in the folded position of said deflector, a pushing force tending to press said deflector against the associated rear door.

7. The body according to claim 5 or 6, wherein, in the deployed position of said deflector, one of the first and second connecting rods (50, 52) of said coupling system bears against a stop of the associated rear door, and the actuating cylinder (54) exerts a pushing force tending to hold said deflector in said deployed position.

8. The body according to any one of the preceding claims, wherein each rear door (30, 32) is mounted movable in rotation on one of the vertical uprights (24) of the rear frame, the deflector (36, 38) associated to said door being shifted rearwards relative to said vertical upright (24) in the deployed position of said deflector.

9. The body according to any one of the preceding claims, wherein each deflector (36, 38) is equipped with at least one roller (40, 42) for said contact with said sidewall.

10. The body according to any one of the preceding claims, wherein each rear door (30, 32) comprises at least one attached insert (49) for rotatably movably mounting said door on the rear frame (22), said coupling system (44) associated to said door comprising a support plate (48) fastened on said insert and on which at least said first connecting rod (50) is hinged.

11. The body according to any one of the preceding claims, wherein said coupling system (44) further comprises a manually-actuatable locking member adapted to cooperate with one of said first and second connecting rods (50, 52) in the folded position of said deflector for locking of said connecting rod.

12. The body according to any one of the preceding claims, wherein, in the closed position of the rear doors (30, 32) and in its folded position, each deflector (36, 38) is set back towards the front with respect to a rear end edge of the rear frame (22) or flush with said rear end edge.

13. A method for operating a deflector (36) mounted on the rear door (30) of a body of a road vehicle for transporting goods comprising two vertical sides (14), a roof (16) and a floor (18) assembled together and partially delimiting an interior cargo space, and a rear reinforcing frame (22) fastened at least on the sides (14), vertical uprights (24) of said rear frame and said sides (14) forming sidewalls of the body, the rear door (30) being movable in rotation between a closed position for closing at least partially the interior cargo space and an extreme open position in which it extends forwards while being transversely spaced apart from one of the sides, wherein:
- the deflector (36) is linked to the rear door via connecting rods while being movable relative to said rear door (30) according to kinematics of displacement between a folded position against the rear door and a deployed position to extend one of the sidewalls of the body rearwards, and wherein
- in the deployed position of the deflector (36) and during the movement of opening the rear door (30) towards its extreme open position, the displacement of a contact forwards between the deflector and said sidewall causes the displacement of the deflector according to said kinematics of displacement towards its folded position.
